# EUROPEAN PATENT APPLICATION

(11) **EP 3 336 803 A1**
(43) Date of publication of application: **20.06.2018**
(21) Application number: 17205611.1
(22) Date of filing: 06.12.2017
(51) Int. Cl.: G06T 7/11, G06T 15/08, G06T 11/00

(54) **MULTI-LAYER COLOR DISPLAY IN SYNTHETIC 2D IMAGES**

(30) Priority: 16.12.2016 US 201615381677
(71) Applicant: General Electric Company, Schenectady, NY 12345 (US)
(72) Inventor: PALMA, Giovanni John Jacques, 78530 BUC, Yvelines (FR); MILIONI DE CARVALHO, Pablo, 78530 Buc, Yvelines (FR); CARTON, Ann-Katherine, 78530 Buc, Yvelines (FR); IORDACHE, Razvan, 78530 Buc, Yvelines (FR); MULLER, Serge Louis Wilfrid, 78530 Buc, Yvelines (FR)
(74) Representative: Bedford, Grant Richard

(57) **Abstract**

In the present invention, an image review method and system 10 for performing the method is provided that enriches the information displayed in the reference image 44 or synthetic views and/or slabs 48 reviewed by the physician with colored layers of information obtained from an image volume 34 and merged with the reference image 44, slabs 48 and/or synthetic views. The colored layer enhancement of the reference image 44, slabs 48 and/or synthetic views highlights the colored areas of interest or features from the image volume 34 in the slabs 48 and/or synthetic views in a manner that prevents the features from becoming lost due to tissue superposition effects or other issues with the combination of the colored layers and reference image 44 to form the displayed combined images.

## Description

The invention relates generally to diagnostic mammography procedures utilizing radiological images and more specifically to systems and methods of identification and presentation of features for review in radiological images for diagnosing patient conditions.

In digital mammography, radiological images in the shape of mammograms are recorded using an X-Ray imaging apparatus. In certain embodiments the X-ray imaging system and/or method id digital breast tomosynthesis (DBT) or contrast-enhanced digital breast tomosynthesis (CE-DBT), in which the imaging system obtains both dual energy (DE/iodine) and low energy (LE) image volumes to perform the diagnostic analysis. With the volumes, the volumes can be partitioned and reconstructed into slices representing cross-sections of the image volume at specific depths in the volume, forming the volume into a slice stack. The individual slices in the slice stack enable the physician to view LE (morphological) structures and DE (contrast uptake/function) structures represented in the image volumes within the slices and torn move through the slice stack in order to compare structures in individual slices with one another, such as to determine the size and/or correspondence of features in different slices.

In DBT/CE-DBT, due to the large number of slices in the slice stack into which the image volumes are partitioned, the review of the slice stack is time consuming. As a result, in order to speed up the review of the slice stack, prior art solutions to this problem have been to create slabs and synthetic views are created to help to accelerate the review. The slabs and synthetic views are formed from combined slices that are representative of an increased thickness of the image volume, lessening the number of images that must be reviewed in order to view the entire slice stack/image volume. Further, the slabs or synthetic views that are formed from the individual slices include the structures illustrated in each of the slices utilized to form the slab or synthetic view.

However, some information represented in the slices is missed or omitted when creating the slabs and/or synthetic views, most often due to tissue superposition effects resulting from the combination of the slice images. Thus, even though the slabs and/or synthetic views are formed directly from the slices of the image volume, there may be structures of clinical interest in the planes represented by the slabs and/or synthetic views that are not visible in those slabs and/or synthetic views.

Therefore, even though the use of slabs and/or synthetic views are intended to speed up the process of review of the entire image volume, in order to ensure no features found in the image volume are overlooked, the physician/radiologist still needs to review all available images, i.e., the synthetic views, the slabs and any necessary slices to ensure that no information is missed. Consequently, this review requires a significant amount of time to complete and does not result in a significant reduction in the time for reviewing the image volume for diagnostic purposes.

As such, it is desirable to develop an improved system and method for the presentation of information present in an image volume for speeding up the review of the information contained in the image volume for diagnostic purposes.

The above-mentioned drawbacks and needs are addressed by the various exemplary embodiments of the invention described herein in the following description.

According to one aspect of an exemplary embodiment of the invention, an image review method and system for performing the method is provided that enriches the information displayed in the synthetic views and/or slabs reviewed by the physician with colored layers of information obtained from the image volume and slices used to create the slabs and/or synthetic views. The colored layer enhancement of the slabs and/or synthetic views highlights the colored areas of interest from the image volume and/or slices in the slabs and/or synthetic views in a manner that prevents the areas of interest from becoming lost due to tissue superposition effects or other issues with the combination of colored images to form the slabs and synthetic images. This permits the radiologist to detect clinically relevant information that is represented in the image volume but is not readily conspicuous in the 2D synthetic projection/slab while reviewing the 2D synthetic projection(s)/slab(s). The individual slices or planes can be reviewed afterwards to characterize/confirm the suspect areas identified during the review of 2D synthetic projection(s)/slab(s). Therefore, the physician is able to provide a diagnosis based on the review of only the slabs and/or synthetic views without reviewing the individual slices, greatly speeding up the diagnostic process.

The enhancement of the slabs and/or synthetic images is provided by adding color to the features or areas of interest that are determined during the construction of the image volume after the imaging process has taken place. The features or areas of interest are located and identified in the image volume as well as in individual slices of the image volume. The features are subsequently extracted from the image volume to form a feature volume that is provided with a color selected to be representative of the particular feature illustrated to form a color volume or color layer indicative of the particular feature. The color volume or color layer(s) formed for each feature is then mapped to the selected reference image to be viewed, e.g., a predetermined slice or slab of the image volume, such that a color image is formed that corresponds to the portion of the image volume or other that the reference image is taken from. The color image(s) for each feature of interest are subsequently merged with the reference image or synthetic view(s) or slab(s) formed using the slices of the image volume to form a combined image. The color layers (s) in the combined image indicate the presence and location of the particular feature(s) within the synthetic view(s) or slab(s), which are manually or automatically selected combinations of multiple slices of the image volume thereby facilitating and accelerating the review of the image volumes for diagnostic purposes.

According to one aspect of one exemplary embodiment of the invention, a method for presenting features of interest in a 2D reference image representing a body part including the steps of obtaining an image volume of an object utilizing an imaging system, identifying at least one feature volume illustrating a feature of interest within the image volume, mapping the at least one feature volume with a 2D reference image to determine a portion of the at least one feature volume in registry the reference image and merging the portion of the at least one feature volume with the reference image to form a combined image.

According to another aspect of one exemplary embodiment of the invention, a method for presenting features of interest in a 2D reference image representing a body part including the steps of obtaining an image volume of an object utilizing an imaging system, identifying at least one feature volume illustrating a feature of interest within the image volume, mapping the at least one feature volume with a 2D reference image to determine a portion of the at least one feature volume in registry the reference image and merging the portion of the at least one feature volume with the reference image to form a combined image. Further, the step of identifying the at least one feature volume within the image volume includes the steps of identifying the features of interest within slices of the image volume, extracting the features of interest from each of the slices; and combining the features of interest from each of the slices to form the at least one feature volume. The method can additionally include the step of adding color to the at least one feature volume after identifying the at least one feature volume to form a color volume, wherein the step of adding color includes the steps of adding a first color to a first feature volume to form a first color volume and adding a second color to a second feature volume to form a second color volume, and wherein the first color is different that the second color. In the method, the step of mapping the at least one feature volume with the reference image can include the step of mapping the color volume with the reference image to determine a portion of the color volume in registry the reference image to form a color image, wherein the step of merging the portion of the at least one feature volume with the reference image to form a combined image includes merging the color image with the reference image.

According to still a further aspect of one exemplary embodiment of the invention, an imaging system for obtaining an image volume in order to identify features of interest from slices of the image volume to form a feature volume for merging with a reference image to form a combined image, the imaging system including an X-ray source, an X-ray detector capable of detecting X-rays emitted from the X-ray source, a system controller operably connected to the X-ray source to control the operation and position of the X-ray source, an image processing module operably connected to the system controller and to the X-ray source, the image processing module configured to process image data from the X-ray detector forming the first image volume to identify a feature volume from the image volume and to merge the feature volume with a reference image to form a combined image, an operator interface connected to the image processing module and a display operably connected to the image processing module to display the combined image.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

The drawings illustrate the preferred mode presently contemplated of carrying out the disclosure. In the drawings:
FIG. 1 is a diagrammatic representation of a mammography imaging system according to one exemplary embodiment of the invention.
FIG. 2 is a schematic view of a method of identifying and coloring features in a slice image for utilization in forming a synthetic view or slab displaying the colored features according to one exemplary embodiment of the invention.
FIG. 3 is a schematic view of a method of obtaining, identifying and coloring features in a slice image for utilization in forming a synthetic view or slab displaying the colored features according to another exemplary embodiment of the invention.

In the following detailed description, reference is made to the accompanying drawings that form a part hereof, and in which is shown by way of illustration specific embodiments, which may be practiced. These embodiments are described in sufficient detail to enable those skilled in the art to practice the embodiments, and it is to be understood that other embodiments may be utilized and that logical, mechanical, electrical and other changes may be made without departing from the scope of the embodiments. The following detailed description is, therefore, not to be taken in a limiting sense.

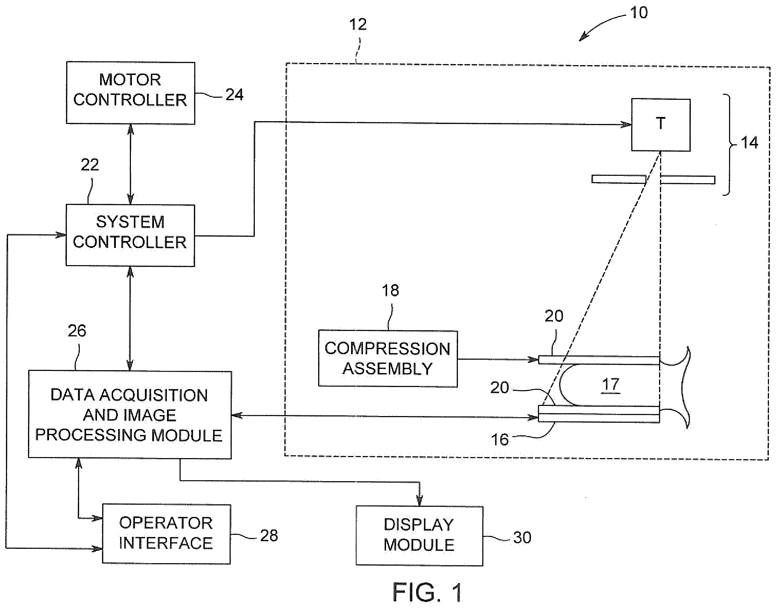

Referring first to FIG. 1, an exemplary tomosynthesis imaging system 10 for use in accordance with the present approach is illustrated diagrammatically. As depicted, the tomosynthesis imaging system 10 includes an image data acquisition system 12. The image data acquisition system 12 includes an X-ray source 14, an X-ray detector 16 and a compression assembly 18. The tomosynthesis imaging system 10 further includes a system controller 22, a motor controller 24, data acquisition and image-processing module 26, an operator interface 28 and a display module 30.

The X-ray source 14 further includes an X-ray tube and a collimator configured to generate a beam of X-rays when activated. The X-ray tube is one example of the X-ray source 14. Other types of the X-ray sources 14 may include solid state X-ray sources having one or more emitters. The X-ray source 14 may be movable in one, two or three dimensions, either by manual or by automated means. The image data acquisition system 12 may move the X-ray source 14 via tracks, ball-screws, gears, belts, and so forth. For example, the X-ray source 14 may be located at an end of a mechanical support, such as a rotating arm or otherwise adjustable support, which may be moved by the image data acquisition system 12 or by an operator. Instead of, or in combination with, a mechanical displacement of the X-ray source 14, different view angles may be achieved through individually addressable source points.

The X-ray detector 16 may be stationary, or may be configured to move either independently or in synchrony with the X-ray source 14. In a present embodiment, the X-ray detector 16 is a digital flat panel detector. The image data acquisition system 12 may move the X-ray detector 16, if mobile, via tracks, ball-screws, gears, belts, and so forth. In one embodiment, the X-ray detector 16 also provides support for an object, such as a breast 17 of a patient to be imaged, thereby forming one part of the compression assembly 18. In other embodiments, the X-ray detector may be disposed immediately or proximately beneath a bottom plate of compression assembly 18, i.e., in such an embodiment, the breast 17 does not rest directly on the detector 16 but on a plate or other compressing support above the detector 16.

The compression assembly 18, whether including two compression plates or a compression plate and the detector 16, is configured to compress the patient breast 17 for performing tomosynthesis imaging and to stabilize the breast 17 during the imaging process to minimize patient motion while data is acquired. In one embodiment, the breast is compressed to near uniform thickness. In the depicted embodiment, the compression assembly 18 includes at least one mammography compression plate 20, which may be a flat, inflexible plate, deformable sheet, or alternative compression device. In one embodiment, the mammography compression plate 20 is configured to be radiolucent to transmit X-rays and is further configured to be sonolucent to transmit ultrasound signals. The compression assembly 18 may be used to stabilize the imaged breast 17 during acquisition of both the tomosynthesis and the ultrasound datasets, thereby enabling the acquisition of co-registered tomosynthesis X-ray images, ultrasound images, and Doppler images.

The system controller 22 controls operation of the image data acquisition system 12 and provides for any physical motion of the X-ray source 14 and/or the X-ray detector 16. In the depicted embodiment, movement is, in turn, controlled through the motor controller 24 in accordance with an imaging trajectory for use in tomosynthesis. Therefore, by means of the image data acquisition system 12, the system controller 22 may facilitate acquisition of radiographic projections at various angles relative to a patient. The system controller 22 further controls an activation and operation of other components of the system, including collimation of the X-ray source 14. Moreover, the system controller 22 may be configured to provide power and timing signals to the X-ray source 14. The system controller 22 may also execute various signal processing and filtration functions. In general, the system controller 22 commands operation of the tomosynthesis imaging system 10 to execute examination protocols and to acquire resulting data.

For example, in the depicted embodiment of FIG. 1, the system controller 22 controls a tomosynthesis data acquisition and image-processing module 26. The tomosynthesis data acquisition and image-processing module 26 communicates with the X-ray detector 16 and typically receives data from the X-ray detector 16, such as a plurality of sampled analog signals or digitized signals resulting from exposure of the X-ray detector to X-rays. The tomosynthesis data acquisition and image-processing module 26 may convert the data to digital signals suitable for processing and/or may process sampled digital and/or analog signals to generate volumetric images of the breast 17 using one or more modalities of the imaging system 10, such as a low energy (LE) imaging modality to obtain a LE image volume and a dual energy (DE/iodine) imaging modality to obtain a DE/iodine image volume using a contrast-enhanced digital breast tomosynthesis (CE-DBT) procedure.

The operator interface 28 may include a keyboard, a mouse, and other user interaction devices. The operator interface 28 can be used to customize settings for the tomosynthesis imaging and for effecting system level configuration changes as well as for allowing operator activation and operation of the tomosynthesis imaging system 10. In the depicted embodiment, the operator interface 28 is connected to the tomosynthesis data acquisition and image-processing module 26, the system controller 22 and the display module 30. The display module 30 presents a reconstructed image of an object, or of a region of interest within the object, based on data from the data acquisition and image-processing module 26. As will be appreciated by those skilled in the art, digitized data representative of individual picture elements or pixels is processed by the tomosynthesis data acquisition and image-processing module 26 to reconstruct the desired image. The image data, in either raw or processed forms, may be stored in the system or remotely for later reference and image reconstruction.

When, in one exemplary embodiment, the imaging system 10 is utilized for conducting a mammography (DBT) examination, image data acquisition system 12 is connected to the system controller/processing unit 22 including the image processing apparatus 26, the operator interface 28 and the display module 30. In this arrangement, the X-Ray images of a female breast are recorded and provided to the processing unit 22 for image processing of the images. The processing unit 22 forms the images into volumes that are comprised of numerous slice images identified at various heights within the image volume. The slice images can be selected and illustrated on the display unit 30 in accordance with one or more embodiment of the invention for diagnosis by a physician.

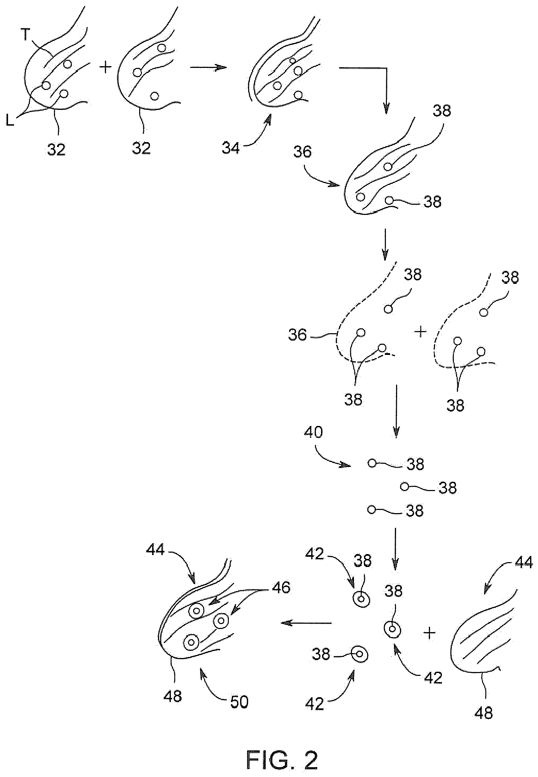

Referring now to FIG. 2, the imaging system 10 is operated to obtain images of the breast 17, such as, for example, in a manner disclosed in US Patent No. 8,958,527, entitled *Method For Acquiring Morphology Of A Breast,* the entirety of which is expressly incorporated herein by reference for all purposes. These modalities can include, but are not limited to, low energy (LE), dual energy (DE), such as used in CE-DBT, contrast-enhanced spectral mammography (CESM) and automated breast ultrasound (ABUS) modalities, among others. In the illustrated exemplary embodiment in FIG. 2, the images shown are taken using an imaging modality, such as a LE imaging modality, providing a first image 32, such as an LE image. Dependent on the type of imaging modality being utilized, different structures, including tissue T and lesions L, in the breast or object 17, are visualized differently in the radiological images 32.

In order to facilitate a diagnosis of the radiological image 32, the images 32 are utilized to form an 3D representation or image volume 34 of the object 17 that is partitioned into slices 36 representing predetermined-width sections across the volume 34, in a known manner. The image volume 34 can be obtained utilizing any of the previously mentioned modalities, and in certain exemplary and non-limiting embodiments the image volume 34 can be an LE image volume, a DE image volume, or an ABUS image volume, among others

Once the volume 34 has been formed form the radiological images 32 obtained in the particular imaging modality or modalities utilized by the system 10, the volume 34is analyzed using pre-determined or specified filters programmed into image processing module 26. Depending upon the particular imaging modality being employed by the imaging system 10, the filters analyze the volume 34 in order to identify the presence and location of particular features 38 in the volume 34. This feature identification step enables the image processing module 26 to apply the selected filters to the volume 34 to locate different features and/or areas of interest 38 in the volume 34, such as, but not limited to, calcification, fibers, convergence, clusters, architectural distortion, masses and/or contrast uptake detection areas, among others. This step does not have to be a crisp detection of the features 38, but rather can be a filter applied to the volume 34 that continuously identifies those features 38 within the volume 34. This identification of the features 38 enables the image processing module 26 to form a 3D feature volume 40 for each of the features 38 identified in the image volume 34, with each feature volume 40 in registry with the image volume 34.

In one exemplary embodiment, the identification of the feature 38 within the volume 34 is performed by first identifying the features 38 within individual slices 36 of the image volume 34. The features 38 are then extracted from the slices 36 in which they are present. In preforming this extraction, in an exemplary and non-limiting embodiment of the invention, after the features 38 are identified in each slice 36, the features 38 are extracted or removed from each slice 36. The extracted features 38 from each slice 36 forming the volume 34 are then combined to form a 3D feature volume 40 for each of the individual features 38 identified in the image volume 34 with each feature volume 40 being in registry with the image volume 34. Once the feature volume(s) 40 has been created, the feature volume 40 for each identified feature 38 is provided with a color selected to correspond to the particular type of feature 38 represented in each individual feature volume 40. Each feature volume 40 provided or encoded with a representative and individual color for the feature 38 represented therein is identified as a color volume 42.

After the color volumes 42 are formed for each feature 23 identified in the image volume 34, a reference image 44 is selected to provide a desired view of a portion of the image volume 34. The reference image 44 can be a synthetic or actual 2D image of the breast 17 or other object that was imaged. In one exemplary embodiment, the reference image 44 is obtained from the same acquisition as the image volume 34 using a single imaging modality. As such, the reference image 44 can be obtained directly from the image volume 34, such as a slice 36 of the image volume 34, a slab 48 computed from combined slices 36 of the image volume 34, or other views or images computed from the image volume 34. In still another exemplary and non-limiting embodiment of the invention, the reference image 44 can be selected from a synthetic view or slab 48 of the image volume 34 having a thickness determined manually or automatically. In this exemplary embodiment, the reference image 44 is in direct registry with the color volume(s) 42 as the reference image 44 and the color volume(s) 42 are directly obtained from the image volume 34. In other exemplary embodiments, the reference image 44 can be formed from one projection from obtained in the particular imaging modality that is utilized to reconstruct the image volume 34, or a recombined image, such as when a CE-DBT acquisition is utilized and the reference image 44 is recombined from the LE and DE imaging modalities. In another exemplary and non-limiting embodiment, the reference image 44 can be obtained from a distinct or separate imaging modality from the modality utilized to obtain the image volume 34. In this embodiment, the reference image 44 can be registered with the image volume 34 in order to obtain the proper color volume 42 for merging with the reference image 44. Additionally, the reference image 44 can be a standard mammography image, such as obtained in a 2D/DBT combination acquisition, or an iodine image from a CESM acquisition.

When the features 38 have been located and/or identified within the volume 34 and formed into the color volume(s) 42, the image processing module 26 proceeds in an exemplary embodiment of the invention to register or map each color volume 42 with regard to the selected reference image 44. This mapping step can be performed in a number of manners, and in one exemplary embodiment of the invention the mapping is performed to determine or map the color volume(s) 42 with the reference image 44. In doing so, the orientation and/or the size of the reference image 44 is determined relative to the image volume 34. Subsequently, the color volume 42 for a feature 38 identified in the image volume 34 is partitioned along the plane or slice or slab of the image volume 34 corresponding to the orientation and/or size of the plane or slice or slab selected as the reference image 44. In another exemplary and non-limiting embodiment of the invention, the mapping of the feature volumes 40 and/or the color volumes 42 in order to form the color image(s) 43 can be performed by utilizing the geometry of the acquisition and/or generation of the reference image 44 to assist in in determining the size and orientation of the reference image 44 for mapping the color volume(s) 42.

The portion of the color volume 42 partitioned or mapped to the location and orientation of the reference image 44 forms a 2D color image 43 for each feature 38 present in the reference image 44. In this manner, as the reference image 44 can be formed of a single slice or a combination of slices of the entire image volume 34, only the sub-portion or subset of the feature volume 40/color volume 42 for a particular feature 38 that is disposed within the defined reference image 44 is utilized to form the color image 43.

The color image(s) 43 are then projected into or merged with the reference image 44 in order to form a combined image 50. The merging involves taking the reference image 44 and combining the color image(s) 43 within the reference image 44 in a known manner to enable the color image 43 to form a color layer 46 within the reference image 44. This projection or merging step is performed for each color volume 42/color image 43 identified as being present in the reference image 44, e.g., the synthetic slab 48, in order to provide a color layer 46 within the reference image 44 corresponding to each feature 38 identified within the portion of the image volume 34 formed by the reference image 44. Further, the merging of the color layer(s) 46 with the reference image 44, e.g., the slab 48, enables the color layers 46 to be clearly presented within the slab 48, such that the features 38 identified by each color layer 46 are not obscured or removed, such as by tissue superposition issues, but are clearly defined in size and position within the combined image 50. In this manner, the information relating to those features 38 identified within the individual slices 36 of the image volume 34 can be visually represented within the combined image 50 on the display module 30 in an easily viewable and identifiable color layer 46 projected onto the reference image 44/slab 48 formed from the image volume 34.

In another exemplary and non-limiting embodiment of the invention, the manner of the display of the color layers 46 within the combined image 50 can be varied in a manual or automatic manner. In one exemplary embodiment, the color layers 46 can be individually or collectively faded or brightened by the physician in order to remove one or more color layer 46 from the combined image 50 in order to selectively review features 38 identified by one or more of the color layers 46 without presentation of color layers 46 representing other features 38. Additionally, the color layers 46 can be selectively alternated between a faded or standard brightness/presentation and a standard or brightened brightness/presentation, or any combination thereof, in order to "flash" the color layer 46 within the combined image 50 on the display 30. Such "flashing" of one or more of the color layers 46 can be done automatically based on parameters stored in the imaging system 10 regarding the features 38 identified by the selected color layers 46 in order to draw the attention of the reviewing physician to those color layers 46 within the combined image 50.

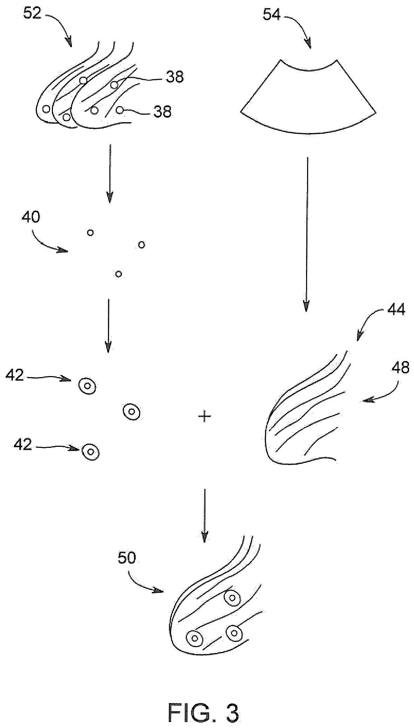

In still a further exemplary and non-limiting embodiment of the invention, shown in FIG. 3, the image volume 34 can be a first image volume 52 that is obtained using a first imaging modality, and a second image volume 54 is obtained utilizing a second imaging modality. The imaging modalities utilized can be selected from, but are not limited to, a low energy (LE) modality, a dual energy (DE) modality, a contrast-enhanced spectral mammography (CESM) modality, and an automated breast ultrasound (ABUS) modality, among others. The first volume 52 and the second volume 54 are registered with one another to enable the feature volume 40, color volume 42, color images 43 and/or color layers 46, obtained from the first image volume 52 to readily be combined with the selected reference image 44, e.g., a synthetic slab 48 obtained from the second image volume 54, or vice versa.

In one example of this embodiment, the imaging system 10 performs a CE-DBT acquisition, where the first image volume 52 obtained is the low energy (LE) volume and the second image volume 54 obtained is the dual energy (DE) (iodine) volume, or vice versa. In this example, the features 38 of interest identified in the second volume 54 can be color-coded into layers 46 that are projected into the reference image 44 formed of synthesized 2D projections/slabs 48 obtained from the first volume 52 to form the combined image 50.

In a second example of this embodiment, the imaging system 10 performs DBT and automated breast ultrasound (ABUS) imaging modalities of the breast 17 where the first image volume 52 is the ABUS volume (registered to the DBT geometry) and the second image volume 54 is the DBT volume, or vice versa. In this example, the features 38 and feature volume(s) 40 identified in the first volume 52 can be color-coded into the color volume(s) 42/color layer(s) 46 and merged into the reference image 44 formed of synthesized 2D projections, views or slabs 48 obtained from the second volume 54 to form the combined image 50.

The written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A method for presenting features of interest in a 2D reference image representing a body part, the method comprising the steps of:
   obtaining an image volume of an object utilizing an imaging system;
   identifying at least one feature volume illustrating a feature of interest within the image volume;
   mapping the at least one feature volume with a 2D reference image to determine a portion of the at least one feature volume in registry the reference image; and
   merging the portion of the at least one feature volume with the reference image to form a combined image.
2. The method of clause 1, wherein the step of identifying the at least one feature volume within the image volume comprises the steps of:
   identifying the features of interest within slices of the image volume;
   extracting the features of interest from each of the slices; and
   combining the features of interest from each of the slices to form the at least one feature volume.
3. The method of any preceding clause, wherein the step of mapping the at least one feature volume comprises mapping the at least one feature volume employing a geometry for acquisition and/or generation of the reference image.
4. The method of any preceding clause, further comprising the step of adding color to the at least one feature volume after identifying the at least one feature volume to form a color volume.
5. The method of any preceding clause, wherein the step of adding color comprises the steps of:
   adding a first color to a first feature volume to form a first color volume; and
   adding a second color to a second feature volume to form a second color volume, wherein the first color is different that the second color.
6. The method of any preceding clause, wherein the step of mapping the at least one feature volume with the reference image comprises the step of mapping the color volume with the reference image to determine a portion of the color volume in registry the reference image to form a color image.
7. The method of any preceding clause, wherein the step of merging the portion of the at least one feature volume with the reference image to form a combined image comprises merging the color image with the reference image.
8. The method of any preceding clause, wherein the step of obtaining the image volume comprises performing an image acquisition to obtain the image volume and the reference image.
9. The method of any preceding clause, wherein the reference image is obtained from the image volume.
10. The method of any preceding clause, wherein the reference image is selected from the group consisting of: a slice of the image volume, a projection utilized to reconstruct the image volume, and a slab computed from the image volume.
11. The method of any preceding clause, wherein the acquisition is a CEDBT acquisition and the reference image is a recombined reference image.
12. The method of any preceding clause, further comprising the step of determining the size and orientation of the reference image prior to mapping the at least one feature volume with the reference image.
13. The method of any preceding clause, wherein the reference image is a synthetic 2D reference image.
14. The method of any preceding clause, wherein the step of obtaining the image volume comprises the steps of:
   performing a first image acquisition to obtain the image volume;
   performing a second image acquisition to obtain the reference image; and
   registering the image volume and the reference image with one another.
15. The method of any preceding clause, wherein the reference image is selected from the group consisting of: a mammography image; a mammography image from a 2D/DBT combo acquisition, and an iodine image resulting from a CESM acquisition.
16. The method of any preceding clause, wherein the image volume is selected from the group consisting of: a low energy volume reconstructed from a CEDBT acquisition, a dual energy volume reconstructed from a CEDBT acquisition, and an ultrasound volume.
17. The method of any preceding clause, further comprising the step of displaying the combined image on a display.
18. The method of any preceding clause, wherein the step of displaying the combined image on the display comprises altering the brightness of the portion of the at least one feature volume.
19. The method of any preceding clause, wherein the step of altering the brightness of the portion of the at least one feature volume comprises flashing the portion of the at least one feature volume.
20. An imaging system for obtaining an image volume in order to identify features of interest from slices of the image volume to form a feature volume for merging with a reference image to form a combined image, the imaging system comprising:
   a system controller operably connected to an X-ray source to control the operation and position of the X-ray source; and
   an image processing module operably connected to the system controller and to the X-ray source, the image processing module configured to process image data from an X-ray detector forming a first image volume to identify a feature volume from the image volume and to merge the feature volume with a reference image to form a combined image.
21. The imaging system of any preceding clause, wherein the image processing module is configured to identify a number of feature volumes within the image volume based on filters input to the image processing module.
22. The imaging system of any preceding clause, wherein the image processing module is configured to provide different colors to the number of feature volumes identified within the image volume.
23. The imaging system of any preceding clause, wherein the imaging system is configured to operate in a first imaging modality to obtain a first image volume from which the feature volume is identified and a second imaging modality to obtain a second image volume in registry with the first image volume and from which the reference image is obtained.
24. The imaging system of any preceding clause, further comprising at least one of:
   an operator interface connected to the image processing module; and
   a display operably connected to the image processing module to display the combined image.

## Claims

1. A method for presenting features of interest in a 2D reference image representing a body part, the method comprising the steps of:
obtaining an image volume (34) of an object utilizing an imaging system (10);
identifying at least one feature volume (40) illustrating a feature of interest within the image volume (34);
mapping the at least one feature volume (40) with a 2D reference image (44) to determine a portion of the at least one feature volume (40) in registry the reference image (44); and
merging the portion of the at least one feature volume (40) with the reference image (44) to form a combined image (50).

2. The method of claim 1, wherein the step of identifying the at least one feature volume within the image volume (34) comprises the steps of:
identifying the features of interest within slices (36) of the image volume;
extracting the features of interest from each of the slices (36); and
combining the features of interest from each of the slices (36) to form the at least one feature volume (40).

3. The method of any preceding claim, wherein the step of mapping the at least one feature volume (40) comprises mapping the at least one feature volume employing a geometry for acquisition and/or generation of the reference image (44).

4. The method of any preceding claim, further comprising the step of adding color to the at least one feature volume (40) after identifying the at least one feature volume (40) to form a color volume (42).

5. The method of claim 4, wherein the step of adding color comprises the steps of:
adding a first color to a first feature volume to form a first color volume (42); and
adding a second color to a second feature volume to form a second color volume (42), wherein the first color is different that the second color.

6. The method of claim 4 or claim 5, wherein the step of mapping the at least one feature volume (40) with the reference image comprises the step of mapping the color volume with the reference image to determine a portion of the color volume in registry the reference image to form a color image.

7. The method of claim 6, wherein the step of merging the portion of the at least one feature volume (40) with the reference image (44) to form a combined image (50) comprises merging the color image with the reference image.

8. The method of any preceding claim, wherein the step of obtaining the image volume (34) comprises performing an image acquisition to obtain the image volume (34) and the reference image (44).

9. The method of claim 8, wherein the reference image (44) is obtained from the image volume (34).

10. The method of any preceding claim, wherein the reference image (34) is selected from the group consisting of: a slice (36) of the image volume (34), a projection utilized to reconstruct the image volume, and a slab (48) computed from the image volume (34).

11. The method of any preceding claim, wherein the acquisition is a CEDBT acquisition and the reference image (44) is a recombined reference image.

12. The method of any preceding claim, further comprising the step of determining the size and orientation of the reference image (44) prior to mapping the at least one feature volume (40) with the reference image (44).

13. The method of any preceding claim, wherein the reference image (44) is a synthetic 2D reference image.

14. The method of any preceding claim, wherein the step of obtaining the image volume (34) comprises the steps of:
performing a first image acquisition to obtain the image volume (34);
performing a second image acquisition to obtain the reference image (44); and
registering the image volume (34) and the reference image (44) with one another.

15. An imaging system (10) for obtaining an image volume (34) in order to identify features of interest from slices (36) of the image volume (34) to form a feature volume (40) for merging with a reference image (44) to form a combined image (50), the imaging system comprising:
a system controller (22) operably connected to an X-ray source (14) to control the operation and position of the X-ray source (14); and
an image processing module (26) operably connected to the system controller (22) and to the X-ray source (14), the image processing module (26) configured to process image data from an X-ray detector (16) forming a first image volume (34) to identify a feature volume (40) from the image volume (34) and to merge the feature volume (40) with a reference image (44) to form a combined image (50).
